# EUROPEAN PATENT APPLICATION

(11) **EP 3 670 900 A1**
(43) Date of publication of application: **24.06.2020**
(21) Application number: 18213607.7
(22) Date of filing: 18.12.2018
(51) Int. Cl.: F03D 80/70, F03D 80/60, F16N 37/00, F16N 31/00

(54) **METHOD FOR FILLING COOLING LIQUID/LUBRICANT INTO A COOLING SYSTEM/LUBRICATION SYSTEM ARRANGED INSIDE A NACELLE OF A WIND TURBINE AND/OR DRAINING COOLING LIQUID/LUBRICANT FROM THE COOLING SYSTEM/LUBRICATION SYSTEM, TRANSPORT ARRANGEMENT AND WIND TURBINE**

(71) Applicant: Siemens Gamesa Renewable Energy A/S, 7330 Brande (DK)
(72) Inventor: Jensen, Mads Damholt Svinbaek, 7330 Brande (DK); Jensen, Martin Binderup, 7330 Brande (DK)
(74) Representative: Aspacher, Karl-Georg

(57) **Abstract**

Method for filling cooling liquid/lubricant into a cooling system/lubrication system (23) arranged inside a nacelle (4) of a wind turbine (1) and/or draining cooling liquid/lubricant from the cooling system/lubrication system (23), the method comprising the steps of a) fluidly connecting a barrel (24) with the cooling system/lubrication system (23), and b) filling the cooling liquid/lubricant from the barrel (24) into the cooling system/lubrication system (23) and/or draining the cooling liquid/lubricant from the cooling system/lubrication system (23) into the barrel (24).

By using a barrel which has a large volume opposed to a can, a large amount of cooling liquid/lubricant can be filled from the barrel into the cooling system/lubrication system and/or drained from the cooling system/lubrication system into the barrel.

## Description

The present invention relates to a method for filling cooling liquid/lubricant into a cooling system/lubrication system arranged inside a nacelle of a wind turbine and/or draining cooling liquid/lubricant from the cooling system/lubrication system, a transport arrangement and a wind turbine comprising the transport arrangement.

In conventional wind turbines, a generator is arranged in a nacelle at the top of the tower of the wind turbine. The generator and other components in the nacelle produce heat during operation. These components have to be cooled to avoid damage. Medium-sized and large wind turbines require cooling by means of a circulating cooling liquid.

For maintenance of the wind turbine, it is often required to refill cooling liquid into the cooling system. Further, for replacement of cooled components of the nacelle, the cooling liquid needs to be drained from the cooling system.

Further, several components in the nacelle such as bearings require a lubrication system. For maintenance of the wind turbine, it is often required to refill lubricant into the lubrication system or to drain lubricant from the lubrication system.

In order to provide cooling liquid/lubricant for refill and to collect cooling liquid/lubricant drained from the cooling system/lubrication system, conventionally several small cans are used. For example, cans with a volume of 20 liters each are used. Due to regulations related to environment, safety and health, each of these cans may only be filled with 15 liters in order to be not too heavy and difficult to handle. Hence, to drain, for example, 150 liters of cooling liquid/lubricant from the cooling system/lubrication system, ten such cans are required.

The cans are stored in the nacelle and take up a considerable amount of space in the nacelle. Furthermore, there is the risk of spilling cooling liquid/lubricant from the can during handling.

It is one object of the present invention to provide an improved method for filling cooling liquid/lubricant into a cooling system/lubrication system arranged inside a nacelle of a wind turbine and draining cooling liquid/lubricant from the cooling system/lubrication system. It is a further object of the present invention to provide a transport arrangement and a wind turbine comprising the transport arrangement.

Accordingly, a method is provided for filling cooling liquid/lubricant into a cooling system/lubrication system arranged inside a nacelle of a wind turbine and/or draining cooling liquid/lubricant from the cooling system/lubrication system. The method comprises a step of a) fluidly connecting a barrel with the cooling system/lubrication system. Further, the method comprises a step of b) filling the cooling liquid/lubricant from the barrel into the cooling system/lubrication system and/or draining the cooling liquid/lubricant from the cooling system/lubrication system into the barrel.

By using a barrel which has a large volume as opposed to a can, a large amount of cooling liquid/lubricant can be filled from the barrel into the cooling system/lubrication system and/or drained from the cooling system/lubrication system into the barrel. This allows to fill cooling liquid/lubricant into the cooling system/lubrication system and/or drain cooling liquid/lubricant from the cooling system/lubrication system with a small number of barrels, for example with only one barrel. Thus, space inside the nacelle can be saved.

Filling the cooling liquid/lubricant into the cooling system/lubrication system means filling the cooling liquid into the cooling system or filling the lubricant into the lubrication system. Draining the cooling liquid/lubricant from the cooling system/lubrication system means draining the cooling liquid from the cooling system or draining the lubricant from the lubrication system.

A wind turbine is an apparatus to convert the wind's kinetic energy into electrical energy. The wind turbine comprises, for example, a rotor having one or more blades, the nacelle including the generator, and the tower holding, at its top end, the nacelle. The tower of the wind turbine may be connected via the transition piece to a foundation of the wind turbine such as a monopile in the sea bed.

The nacelle comprises a cooling system to cool the generator and other components in the nacelle which produce heat during operation. The cooling system comprises in particular the components to be cooled and cooling elements surrounding the components. The cooling elements include, for example, channels through which the cooling liquid circulates. Further, the cooling system comprises in particular a heat exchanger and pipes connecting the cooling elements and the heat exchanger.

Further, the nacelle comprises a lubrication system to supply a lubricant to components such as bearings.

The method step of filling the cooling liquid/lubricant from the barrel into the cooling system/lubrication system is, for example, carried out before initially placing the wind turbine in operation.

The step of (re)filling the cooling liquid/lubricant from the barrel into the cooling system/lubrication system and/or the step of draining the cooling liquid/lubricant from the cooling system/lubrication system into the barrel are, for example, carried out during a break of operation of the wind turbine.

For example, for maintenance of the wind turbine, it might be required to exchange one or more of the cooled components of the wind turbine. For example, it might be necessary to exchange the generator or a gear box of the wind turbine. In such a case, draining of the cooling liquid from the cooling system into the barrel is carried out before the exchange of the respective component. After exchanging the component, the cooling liquid is refilled from the barrel into the cooling system.

"Cooling system/lubrication system" herein means "cooling system and/or lubrication system". "Cooling liquid/lubricant" herein means "cooling liquid and/or lubricant".

According to an embodiment, the barrel has a volume of larger than 100 liters, more preferably larger than 200 liters.

This allows to fill more than 100 and/or more than 200 liters from the barrel into the cooling system/lubrication system and/or drain this volume of cooling liquid/lubricant from the cooling system/lubrication system into the barrel.

According to a further embodiment, the barrel is provided, before step a), in a bag made of a liquid-proof material and/or the barrel is removed, after step b), in the bag. The bag is configured to contain cooling liquid/lubricant spilt from the barrel.

Having the step of providing and/or removing the barrel in the bag made of the liquid-proof material avoids spilling of cooling liquid/lubricant from the barrel into the environment. For example, spilling of cooling liquid/lubricant inside the wind turbine tower and/or in the nacelle can be avoided.

The barrel may be provided in the bag made of the liquid-proof material such that the bag is closed in a liquid-proof manner. Alternatively, the barrel may be provided in the bag made of the liquid-proof material such that the bag is open at an upper portion thereof.

Providing and/or removing of the barrel in the bag includes, for example, transporting the barrel in the bag. The barrel in the bag is, for example, transported into the nacelle. For transportation of the barrel in the bag, the bag may be closed in a liquid-proof manner. Transporting the barrel in the sealed bag allows to avoid spilling of the cooling liquid/lubricant from the barrel during transportation. For example, even if the barrel falls down during transportation, no cooling liquid/lubricant escapes from the sealed bag.

Providing of the barrel in the bag includes, for example, arranging the barrel at that location in the nacelle where it is used for filling and/or draining of cooling liquid/lubricant from the cooling system/lubrication system. In this case, providing the barrel in the bag may include opening of the bag at a top portion thereof. Having the bag opened at a top portion thereof allows access to the liquid port of the barrel. At the same time, providing the barrel in the (opened) bag for filling and/or draining allows to collect cooling liquid/lubricant spilt from the barrel during filling and/or draining.

According to a further embodiment, a top portion of the bag is rolled for liquid-proof closing of the bag.

"Liquid-proof" is herein understood to include lubricant-proof. For example, for transportation of the barrel in the bag, the top portion of the bag may be rolled for liquid-proof closing of the bag. Having the step of rolling the top portion of the bag allows a better liquid-proof sealing of the bag. Thus, cooling liquid/lubricant spilt from the barrel can be better contained.

The bag comprises, in particular, a roll top closure with a quick release buckle at each of two ends of the roll top closure.

The liquid-proof closing of the bag may further include, after rolling the top portion, engaging the two corresponding quick release buckles of the bag.

By engaging the quick release buckles of the bag, the rolled up top portion remains securely in its rolled-up state. Hence, the bag can be securely sealed.

According to a further embodiment, the barrel is provided in the bag and/or is removed in the bag by lifting and/or lowering the bag by means of a crane from a first position inside the wind turbine to a second position inside the wind turbine.

Having the barrel provided in the bag and/or removed in the bag by means of a crane allows to provide and/or remove the barrel which is too heavy to be handled manually. Thus, a barrel with a larger volume and/or containing a larger amount of cooling liquid/lubricant can be used for filling and/or draining of cooling liquid/lubricant into/from the cooling system/lubrication system.

Lifting and/or lowering of the bag by means of the crane includes, for example, attaching the bag to the crane. The bag comprises, in particular, carrying means such as one or more carrying straps. The bag comprises, for example, one carrying strap at each of the two ends of the top portion. Alternatively, for the bag which is sealed by rolling the top portion and engaging the quick release buckles, the engaging of the quick release buckles forms a loop which can be used for attaching the bag to the crane. Furthermore, the bag may comprise additional lateral carrying means such as one or more lateral carrying straps.

The crane may be arranged inside the nacelle and/or at a top portion of the nacelle.

According to a further embodiment, one of the first position and the second position is located at a lower portion of a tower of the wind turbine and the other one of the first position and the second position is located inside the nacelle, or wherein both the first position and the second position are located inside the nacelle.

For example, the barrel can be transported from a lower portion of the tower or from the transition piece, e.g., from a platform at an entrance level, to the nacelle. For example, the barrel can be transported from an upper portion of the tower, e.g., from a platform just below the nacelle, to the nacelle. For example, the barrel can be transported from a storing position in the nacelle to a location where it is used for filling/draining of cooling liquid/lubricant.

In embodiments, the barrel can also be lifted by means of the crane at the outside of the tower.

According to a further embodiment, the barrel is fluidly connected with the cooling system/lubrication system by means of a hose and/or wherein the barrel is fluidly connected with the cooling system/lubrication system or the hose by means of a quick connector.

By fluidly connecting the barrel with the cooling system/lubrication system by means of the hose, allows to bridge also larger distances between the barrel and the cooling system/lubrication system.

By fluidly connecting the barrel with the cooling system/lubrication system or the hose by means of a quick connector, allows to easily connect and disconnect the barrel with/from the cooling system/lubrication system or the hose. For example, a quick connector element of the barrel is fluidly connected with a corresponding quick connector element of the hose. The quick connector element of the hose is, for example, inserted into the quick connector element of the barrel.

According to a further embodiment, the barrel includes a ventilation element for ventilating the barrel during filling and/or draining of the cooling liquid/lubricant.

By ventilating the barrel during filling and/or draining of the cooling liquid/lubricant the air content of the barrel can be balanced depending on the liquid/lubricant content of the barrel. Thus, the filling and/or draining of cooling liquid/lubricant can be improved.

According to a further embodiment, the barrel comprises a level indicator for monitoring the level of the cooling liquid/lubricant when draining the cooling liquid/lubricant from the cooling system/lubrication system into the barrel.

The level indicator comprises, for example, a floater.

By monitoring the level of the cooling liquid/lubricant by means of the level indicator, the cooling liquid/lubricant can be drained from the cooling system/lubrication system into the barrel until a predetermined level indicated by the level indicator is reached. The predetermined level is, for example, a level permitted by regulations related to environment, safety and health. Thus, overfilling above the predetermined liquid/lubricant level can be avoided.

According to a further embodiment, the cooling liquid/lubricant is filled from the barrel into the cooling system/lubrication system and/or drained from the cooling system/lubrication system into the barrel by means of a pump.

Using a pump for filling and/or draining of cooling liquid/lubricant allows to provide the required pressure for filling and/or draining the cooling liquid/lubricant.

According to a further embodiment, the cooling system/lubrication system is configured to cool/lubricate one or more components of the nacelle, the one or more components including a gearbox, a generator, an inverter, a transformer, a control cabinet, a power cable and/or bearings.

Cooling of the gearbox, the generator, the inverter, the transformer, the control cabinet and/or the power cable allows an endurable and reliable operation of the wind turbine and avoids damages of the respective components.

For example, cooling of the gearbox allows to prevent a high temperature of the lubrication oil of the gearbox. Preventing a high temperature of the lubrication oil of the gearbox avoids deterioration of the performance of the lubrication oil such as too low viscosity of the lubrication oil and damage of the lubrication film.

For example, by cooling the generator the large amount of heat produced by the generator can be dissipated. This is increasingly important for increasing capacities of wind turbines.

According to a further embodiment, the barrel is arranged at a distance of larger than 3 meters, larger than 5 meters, larger than 7 meters and/or larger than 10 meters from the one or more components of the nacelle.

By having the barrel arranged at a larger distance from the components of the nacelle, the barrel does not interfere with the operation of the wind turbine. For example, maintenance work at said components can be carried out without the barrel obstructing the access to the components.

According to a further embodiment, the cooling liquid comprises water, an ethylene glycol aqueous solution or oil.

Using water as the cooling liquid provides an efficient and cost-effective coolant.

Using an ethylene glycol aqueous solution as the cooling liquid provides better anti-freeze properties. This is particularly important at a wind harvesting site where the outside temperatures can drop significantly below 0 degree Celsius.

Using oil as the cooling liquid allows to enhance the cooling efficiency.

According to a further embodiment, the lubricant comprises oil and/or grease.

According to a further aspect, a transport arrangement is provided. The transport arrangement comprises a barrel for storing cooling liquid/lubricant drained from a cooling system/lubrication system of a nacelle of a wind turbine and/or cooling liquid/lubricant to be filled into the cooling system/lubrication system. Further, the transport arrangement comprises a bag made of a liquid-proof material for containing cooling liquid/lubricant spilt from the barrel. Furthermore, the barrel is arranged inside the bag.

According to a further aspect, a wind turbine comprising the transport arrangement is provided.

The embodiments and features described with reference to the method of the present invention apply mutatis mutandis to the transport arrangement and the wind turbine of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows, in partial cross-section, a wind turbine according to an embodiment;
Fig. 2 shows, in partial cross-section, a detailed view of a portion of the wind turbine of Fig. 1;
Fig. 3 shows, in perspective view, a transport arrangement of the wind turbine of Fig. 1, the transport arrangement including a barrel and a bag;
Fig. 4 shows the transport arrangement of Fig. 3 attached to a hook of a crane;
Fig. 5 shows, in perspective detailed view, the barrel of Fig. 3;
Fig. 6 shows, in perspective detailed view, a lid of the barrel of Fig. 5; and
Fig. 7 shows a flowchart illustrating a method for filling cooling liquid into a cooling system arranged inside a nacelle of the wind turbine of Fig. 1 and/or draining cooling liquid from the cooling system according to an embodiment.

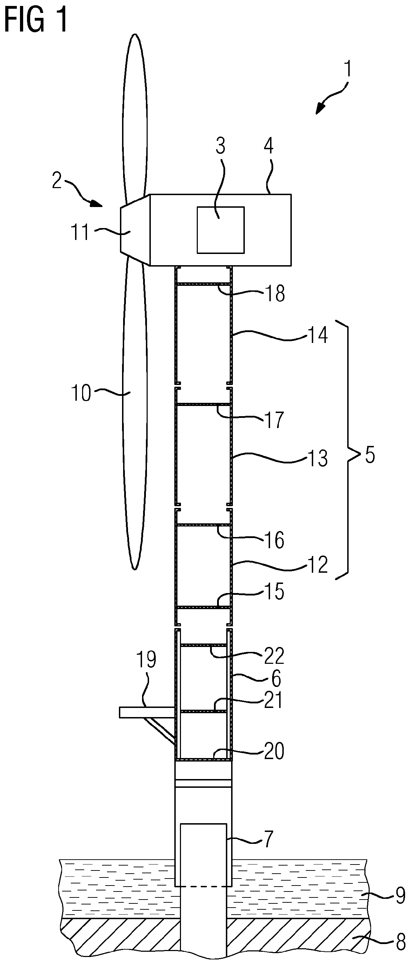

In the Figures, like reference numerals designate like or functionally equivalent elements, unless otherwise indicated. Fig. 1 shows an offshore wind turbine 1 according to an embodiment.

The wind turbine 1 comprises a rotor 2 connected to a generator 3 arranged inside a nacelle 4. The nacelle 4 is arranged at the upper end of a tower 5 of the wind turbine 1 by means of a yaw bearing (not shown) such that the nacelle 4 can rotate relative to the tower 5. The tower 5 is arranged on a transition piece 6. The transition piece 6 is erected on a monopile 7. The monopile 7 is driven into the sea bed 8 and extends above the sea water 9.

The rotor 2 comprises, for example, three rotor blades 10. The rotor blades 10 are connected to a hub 11 of the wind turbine 1. A shaft (not shown) connects the hub 11 via a gearbox (not shown) to the generator 3. The generator 3 is electrically connected to a switch gear (not shown) in the transition piece 6.

The tower 5 comprises one or more tower sections 12, 13, 14. In the example of Fig. 1, the tower 5 comprises a bottom tower section 12, a middle tower section 13, and a top tower section 14.

The tower 5 comprises inside one or more platforms 15, 16, 17, 18. The tower 5 comprises, for example, a low voltage platform 15 in the bottom tower section 12 on which a low voltage transformer (not shown) is located. The tower 5 comprises, for example, bolt platforms 16 and 17 configured for a worker to bolt the corresponding tower sections 12, 13, 14 to each other when assembling the tower 5. The tower 5 comprises, for example, a yaw platform 18 in the top tower section 14 on which a yaw system (not shown) is arranged. The yaw system includes, for example, a yaw drive, a yaw brake and a yaw control system.

The transition piece 6 comprises on its outside a landing platform 19 to provide access to the interior of the transition piece 6 and the tower 5. The transition piece 6 comprises further one or more platforms 20, 21, 22 inside. The transition piece 6 comprises, in particular, a switch gear platform 21 on the same level with the landing platform 19.

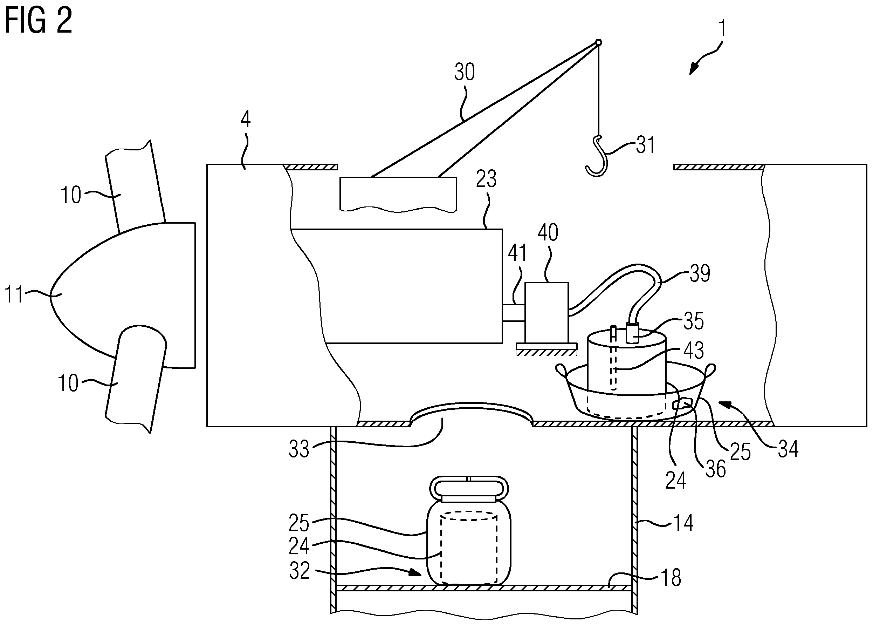

The generator 3 and other components of the nacelle 4 are generating heat during the operation of the wind turbine 1 and, therefore, have to be actively cooled. In the described example, the wind turbine 1 comprises a cooling system 23 (Fig. 2) with a circulating cooling liquid.

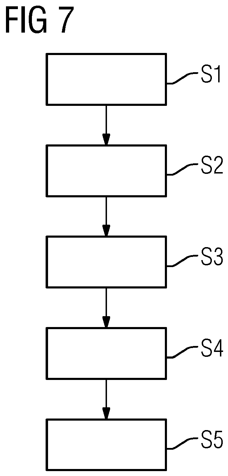

In the following, a method for filling cooling liquid into the cooling system 23 arranged inside the nacelle 4 and/or draining cooling liquid from the cooling system 23 is described with respect to Figs. 2 to 7.

Although not described in the following, in an alternative embodiment, the method may also be used for filling a lubricant, such as oil or grease, into a lubrication system (not shown) arranged inside the nacelle 4 and/or draining the lubricant from the lubrication system. The lubrication system may, for example, be configured for supplying the lubricant to main bearings (not shown) of the shaft (not shown), the shaft connecting the hub 11 to the generator 3.

Fig. 2 shows a detailed view of a portion of the wind turbine 1 of Fig. 1 including the nacelle 4. Fig. 2 provides a partial insight into the interior of the nacelle 4 revealing, for example, the cooling system 23. The cooling system 23 comprises, for example, the components to be cooled such as the generator 3, a gear box (not shown), an inverter (not shown) etc. Further, the cooling system 23 comprises cooling elements (not shown) surrounding the components. The cooling elements include, for example, channels through which the cooling liquid circulates. Further, the cooling system comprises, in particular, a heat exchanger and pipes (not shown) connecting the cooling elements and the heat exchanger.

In a step S1 of the method, a barrel 24 with a volume of 220 liters is provided in a bag 25 made of a liquid-proof material.

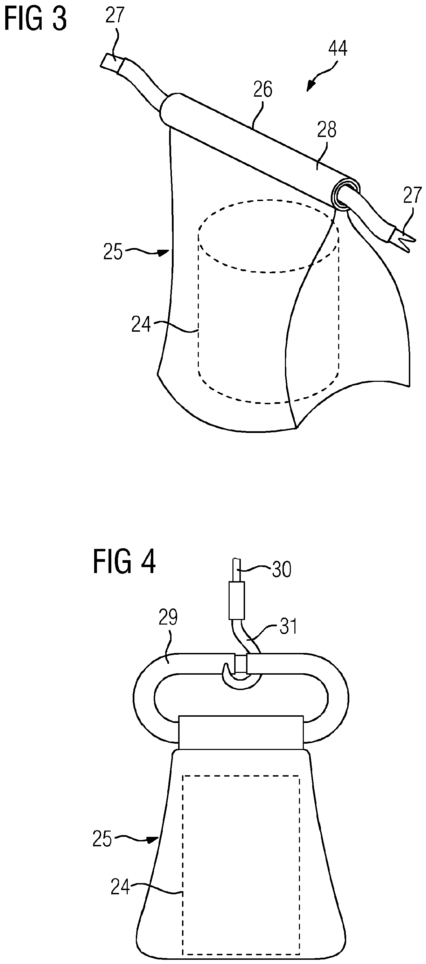

Fig. 2 shows the barrel 24 in the bag 25 arranged on the yaw platform 18 of the wind turbine 1. Figs. 3 and 4 show detailed views of a transport arrangement 44 including the bag 25 and the barrel 24.

For providing the barrel 24 in the bag 25, firstly, the barrel 24 is arranged inside the bag 25, and, secondly, the bag 25 is closed in a liquid proof manner. As shown in Fig. 3, the bag 25 comprises a roll top closure 26 with a quick release buckle 27 at each of two ends of the roll top closure 26. The bag 25 is closed by rolling a top portion 28 of the bag 25. The top portion 28 is, for example, rolled three times. Then, the two corresponding quick release buckles 27 are engaged with each other such that the rolled up top portion 28 remains securely in its rolled-up state. As shown in Fig. 4, by engaging the quick release buckles 27, a loop 29 is formed.

A crane 30 is arranged in the nacelle 4 or on top of the nacelle 4 (Fig. 2). A hook 31 of the crane 30 is attached to the loop 29 of the closed bag 25 (Fig. 4).

The bag 25 with the barrel 24 inside is lifted by means of the crane 30 from a first position 32, such as the yaw platform 18, through a hatch 33 into the nacelle 4 (Fig. 2). The bag 25 can also be lifted by means of the crane 30 from any other platform 20, 21, 22, 15, 16, 17 of the wind turbine 1 into the nacelle 4. The crane 30 transports and lowers the bag 25 to a second position 34 inside the nacelle 4. Due to the barrel 24 being packed liquid-proof in the bag 25, any spilling of the cooling liquid from the barrel 24 during transportation is contained in the bag 25.

The second position 34 is a position in the nacelle 4 where the barrel 24 is used for filling and/or draining of cooling liquid into/from the cooling system 23. At the second position 34, the bag 25 is opened (Fig. 2) by disengaging the quick release buckles 27 and unrolling the top portion 28 of the bag 25. When the bag 25 is opened at an upper portion thereof access to a liquid port 35 of the barrel 24 is possible while spilt cooling liquid 36 can still be collected by the bag 25.

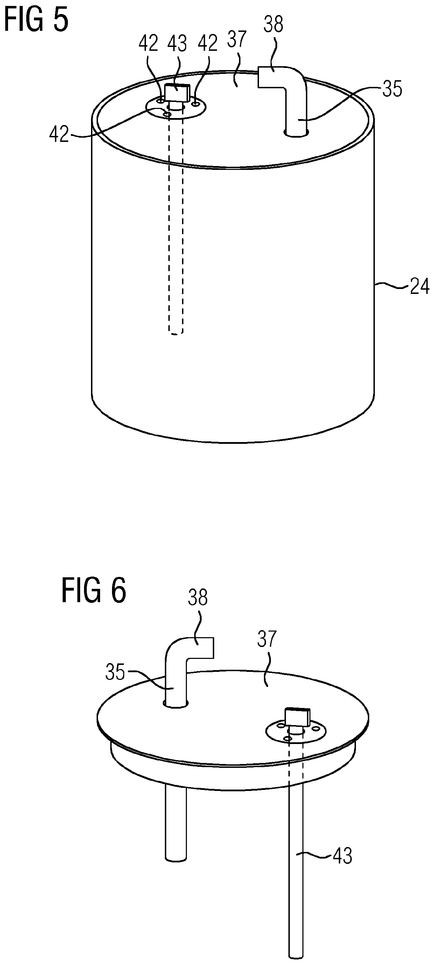

In a step S2, the barrel 24 is fluidly connected with the cooling system 23. As shown in Figs. 5 and 6, a lid 37 of the barrel 24 comprises the liquid port 35. The liquid port 35 comprises a quick connector element 38. The quick connector element 38 is fluidly connected with a corresponding quick connector element (not shown) of a hose 39 (Fig. 2). The hose 39 is connected via a pump 40 to a port 41 of the cooling system 23.

In a step S3, the cooling liquid is drained by means of the pump 40 from the cooling system 23 into the barrel 24. Before starting to drain cooling liquid from the cooling system 23 into the barrel 24, a ventilation element 42 (Fig. 5) for ventilating the barrel 24 during draining of the cooling liquid is opened.

In the case of the alternative embodiment related to the lubrication system (not shown) instead of the cooling system 23, the lubricant is drained in step S3 from the lubrication system into the barrel 24.

The barrel 24 comprises in its lid 37 a level indicator 43 for monitoring the level of the cooling liquid when draining the cooling liquid from the cooling system 23 into the barrel 24. The level indicator 43 comprises a floater with a stick. Both the floater and the stick of the level indicator 43 are rising as the liquid level in the barrel 24 rises. The cooling liquid is drained from the cooling system 23 into the barrel 24 until a predetermined level indicated by the level indicator 43 is reached to avoid overfilling of the barrel 24.

After (at least partially) draining the cooling liquid from the cooling system 23, maintenance work can be carried out at the cooling system 23. Maintenance work may include, for example, exchanging a component of the cooling system 23 which is cooled during operation.

In a step S4, the cooling liquid is refilled by means of the pump 40 from the barrel 24 into the cooling system 23.

In the case of the alternative embodiment related to the lubrication system (not shown) instead of the cooling system 23, the lubricant is refilled from the barrel 24 into the lubrication system in step S4.

The method may comprise a further step S5 of removing the barrel 24 in the bag 25. Here, the bag may be closed again for transportation by the crane 30, as described above.

As described above, the barrel 24 may be provided in the bag 25 made of the liquid-proof material such that the bag 25 is closed in a liquid-proof manner, as shown in the lower part of Fig. 2 and in Figs. 3 and 4. Alternatively, the barrel 24 may be provided in the bag 25 such that the bag 25 is open at an upper portion thereof, as shown in the upper part of Fig. 2. In both cases, spilling of cooling liquid from the barrel 24 into the environment can be avoided.

Although the present invention has been described in accordance with preferred embodiments, it is obvious for the person skilled in the art that modifications are possible in all embodiments.

## Claims

1. Method for filling cooling liquid/lubricant into a cooling system/lubrication system (23) arranged inside a nacelle (4) of a wind turbine (1) and/or draining cooling liquid/lubricant from the cooling system/lubrication system (23), the method comprising the steps of:
a) fluidly connecting a barrel (24) with the cooling system/lubrication system (23), and
b) filling the cooling liquid/lubricant from the barrel (24) into the cooling system/lubrication system (23) and/or draining the cooling liquid/lubricant from the cooling system/lubrication system (23) into the barrel (24).

2. Method according to claim 1,
wherein the barrel (24) has a volume of larger than 100 liters, more preferably larger than 200 liters.

3. Method according to claim 1 or 2,
providing, before step a), the barrel (24) in a bag (25) made of a liquid-proof material and/or removing, after step b), the barrel (24) in the bag (25), the bag (25) being configured for containing cooling liquid/lubricant spilt (36) from the barrel (24).

4. Method according to claim 3,
wherein a top portion (28) of the bag (25) is rolled for liquid-proof closing of the bag (25).

5. Method according to claim 3 or 4,
wherein the barrel (24) is provided in the bag (25) and/or is removed in the bag (25) by lifting and/or lowering the bag (25) by means of a crane (30) from a first position (32) inside the wind turbine (1) to a second position (34) inside the wind turbine (1).

6. Method according to claim 5,
wherein one of the first position (32) and the second position (34) is located at a lower portion of a tower (5, 6) of the wind turbine (1) and the other one of the first position (32) and the second position (34) is located inside the nacelle (4), or wherein both the first position (32) and the second position (34) are located inside the nacelle (4).

7. Method according to any one of claims 1 - 6,
wherein the barrel (24) is fluidly connected with the cooling system/lubrication system (23) by means of a hose (39) and/or wherein the barrel (24) is fluidly connected with the cooling system/lubrication system (23) or the hose (39) by means of a quick connector (38).

8. Method according to any one of claims 1 - 7,
wherein the barrel (24) includes a ventilation element (42) for ventilating the barrel (24) during filling and/or draining of the cooling liquid/lubricant.

9. Method according to any one of claims 1 - 8,
wherein the barrel (24) comprises a level indicator (43) for monitoring the level of the cooling liquid/lubricant when draining the cooling liquid/lubricant from the cooling system/lubrication system (23) into the barrel (24).

10. Method according to any one of claims 1 - 9,
wherein the cooling liquid/lubricant is filled from the barrel (24) into the cooling system/lubrication system (23) and/or drained from the cooling system/lubrication system (23) into the barrel (24) by means of a pump (40).

11. Method according to any one of claims 1 - 10,
wherein the cooling system/lubrication system (23) is configured to cool/lubricate one or more components of the nacelle (4), the one or more components including a gearbox, a generator (3), an inverter, a transformer, a control cabinet, a power cable and/or bearings.

12. Method according to claim 11,
wherein the barrel (24) is arranged at a distance of larger than 3 meters, larger than 5 meters, larger than 7 meters and/or larger than 10 meters from the one or more components of the nacelle (4).

13. Method according to any one of claims 1 - 12,
wherein the cooling liquid comprises water, an ethylene glycol aqueous solution or oil.

14. Transport arrangement (44), comprising:
a barrel (24) for storing cooling liquid/lubricant drained from a cooling system/lubrication system (23) of a nacelle (4) of a wind turbine (1) and/or cooling liquid/lubricant to be filled into the cooling system/lubrication system (23), and
a bag (25) made of a liquid-proof material for containing cooling liquid/lubricant spilt (36) from the barrel (24),
wherein the barrel (24) is arranged inside the bag (25).

15. Wind turbine (1) comprising the transport arrangement (44) of claim 14.
